Europäisches Patentamt

**European Patent Office**

Office européen des brevets

(11) Publication number: **0 057 794**
**A1**

## EUROPEAN PATENT APPLICATION

(21) Application number: **81305904.5**

(22) Date of filing: **16.12.81**

(51) Int. Cl.³: **G 02 B 7/26**

(30) Priority: **09.02.81 US 233002**

(43) Date of publication of application:
**18.08.82 Bulletin 82/33**

(84) Designated Contracting States:
**AT BE CH DE FR GB IT LI LU NL SE**

(71) Applicant: **Litton Systems, Inc.**
**360 North Crescent Drive**
**Beverly Hills California 90210(US)**

(72) Inventor: **Dorsey, Glenn F.**
**2811 Tall Oaks Drive**
**Blacksburg Virginia 24060(US)**

(74) Representative: **Cheyne, John Robert Alexander**
**Mackenzie European Patent Attorney et al,**
**Haseltine Lake & Co. Hazlitt House 28 Southampton**
**Buildings Chancery Lane**
**London WC2A 1AT(GB)**

(54) **An optical connector.**

(57) An optical connector (10) comprises two optic fibres (44, 46) which are axially aligned and relatively rotatable. In order to reduce the sensitivity of the connector (10) to axial misalignment of the fibres (44, 46) and to variation in the spacing between the ends of the fibres, each fibre is provided with a cylindrical lens (40, 42). The lens (40) provided at the end of the emitting fibre (44) collimates the emitted light into a parallel beam which is greater in diameter than the emitting fibre (44). The other lens (42) focusses the parallel beam into the end of the other fibre (46).

Fig-1

EP 0 057 794 A1

AN OPTICAL CONNECTOR

This invention relates to an optical connector for use with fibre optic cables.

It is well known to optically couple two fixed fibre optic cables, each having a single optic fibre, by maintaining the ends of the fibres adjacent each other and in axial alignment. Such couplings do not however, provide an optical connection which permits relative rotation between two cables.

United States Patent Application Serial No. 204,762 discloses an optical connector for fibre optic cables which permits such relative rotation. The present invention is intended to reduce the sensitivity of that coupling both to axial misalignment of the fibre optic cable ends and to the spacing of the fibre optic cable ends.

For a better understanding of the present invention and to show how it may be carried into effect, reference will now be made, by way of example, to the accompanying drawings, in which:

Figure 1 is a perspective view in partial section of a single channel fibre optic connection; and

Figure 2 is a schematic view of the optical coupling of the connection of Figure 1.

The fibre optic connection 10 generally includes a first part 12 and a second part 14 for maintaining two fibre optic cables 30 and 32 axially aligned during relative rotation thereof. For convenience, the part 12 will be referred to from now on as a rotor assembly and the part 14 as a stator assembly. The rotor assembly 12 includes a spigot 26 which is mounted within a recess in an axially extending sleeve 16 which is part of a cylindrical member 28 of the stator assembly 14 by a pair of preloaded bearings 18. These bearings 18 are secured axially with respect to the spigot 26 by a retaining ring 20 and a nut 22 and are maintained axially with respect to the sleeve 16 by a nut 24.

The spigot 26 and the cylindrical member 28 each have an axial bore for receiving the respective fibre optic cables 30 and 32. Stainless steel bushings 34 and 36 are mounted within the respective adjacent ends of these bores and are separated by a selected bushing gap 38. Graded index rod lenses 40 and 42 are disposed in the bushings 34 and 36 and terminate flush with the oppositely facing axial end faces of the bushings.

The fibre optic cable 30 is fixed by an adhesive or other conventional means in the rotor bore and has an exposed length of optic fibre 44 which extends into an axial bore in the rotor bushing 34, this bore terminating at the rotor lens 40. The fibre optic cable 32 is fixed in the stator bore and has an exposed length of optic fibre 46 which extends into an axial bore in the stator bushing 36, this bore terminating at the stator lens 42. In the preferred embodiment, a drop of optical cement is interposed between the respective fibre ends and the lenses to prevent separation.

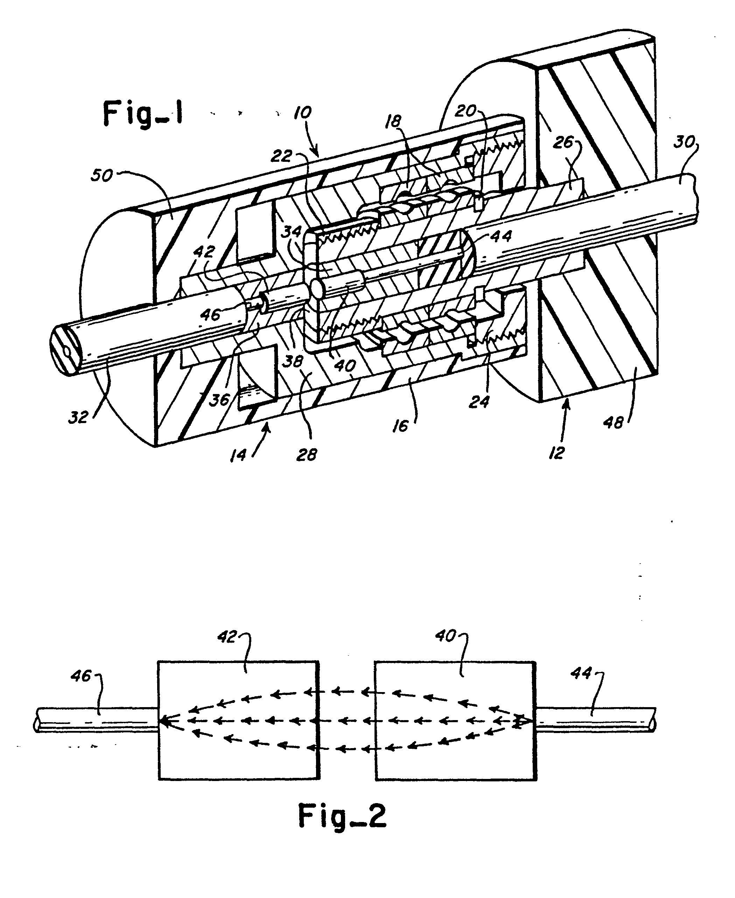

As can be seen in Figure 2, the focal lengths of the lenses are selected so that the rotor lens 40 collimates a light signal emitted from the rotor optic fibre 44 into a parallel beam or column of light axially directed at the stator lens 42. The stator lens picks up the collimated beam and focuses it into the end of the stator fibre 46.

In the preferred embodiment, graded rod index lenses having a 1-2mm diameter, commercially sold under the trademark SELFOC, are employed to couple commercially available optic fibres typically 0.068 to 0.4mm in diameter. The opposing lens faces in the rotary optical coupling create an emission. and pick up area which is substantially greater than the diameter of the optic fibres. An axial misalignment of 1mm of the lenses 40 and 42 results in significantly less signal cut-off than would the same axial misalignment of the bare fibre ends. Moreover, the collimation of the optical signal within the rotary connector permits the lens gap to be significantly larger than the gap between fibres in a direct fibre-to-fibre rotary connector for sustaining comparable optical coupling transmission. Preferably, the lens gap is less than one-tenth of an inch (2.54mm) which is a much greater range than the 1 mil (0.0254mm) tolerance preferred for the fibre end gap of the fibre-to-fibre rotary optical connector disclosed in United States Application Serial No. 204,762.

In the preferred embodiment, the rotor assembly includes a flange end 48 which provides a suitable mounting base and the stator assembly includes a plastic sheath 50.

CLAIMS

1. An optical connector comprising two optic fibres (44, 46) having aligned end portions and bearing means (18) for supporting the optic fibres (44, 46) for rotation relatively to each other about the common axis of the end portions, characterised in that a respective cylindrical lens (40,42) is provided at the end of each optic fibre (44, 46) facing the other optic fibre, whereby, in use of the connector, light emitted by one of the optic fibres (44, 46) is collimated by the respective lens (40,42) into a parallel beam which has a diameter larger than that of the emitting optic fibre, the beam being focussed by the other lens into the end of the other optic fibre.

2. An optical connector as claimed in claim 1, in which each lens (40, 42) is bonded to its respective optic fibre (44, 46) by optical cement.

3. An optical connector as claimed in claim 1 or 2, in which each lens (40, 42) comprises a graded index rod lens.

Fig_1

Fig_2

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| Y | US - A - 4 239 330 (A. ASHKIN et al.)<br>* abstract *<br>-- | 1,3 | G 02 B 7/26 |
| Y | APPLIED OPTICS, Vol. 19, No. 12<br>June 1980, New York<br>J.C. PALAIS "Fiber Coupling Using Graded-Index Rod Lenses"<br>pages 2011 to 2018<br>-- | 1,3 | |
| A | APPLIED OPTICS, Vol. 19, No. 7<br>April 1980, New York<br>W.J. TOMLINSON "Applications of GRIN-Rod Lenses in Optical Fiber Communication Systems"<br>pages 1127 to 1138<br>-- | 1-3 | **TECHNICAL FIELDS SEARCHED (Int.Cl. ³)**<br><br>G 02 B 7/26 |
| A | US - A - 3 829 195 (E.G. RAWSON)<br>* abstract *<br>-- | 1,3 | |
| P,A | EP - A1 - 0 035 054 (LICENTIA PATENT-VERWALTUNGS-GMBH)<br>* claims *<br>---- | 1 | **CATEGORY OF CITED DOCUMENTS**<br><br>X: particularly relevant if taken alone<br>Y: particularly relevant if combined with another document of the same category<br>A: technological background<br>O: non-written disclosure<br>P: intermediate document<br>T: theory or principle underlying the invention<br>E: earlier patent document, but published on, or after the filing date<br>D: document cited in the application<br>L: document cited for other reasons<br><br>&: member of the same patent family, corresponding document |

| X | The present search report has been drawn up for all claims | | |
|---|---|---|---|
| Place of search<br>Berlin | Date of completion of the search<br>22-04-1982 | Examiner<br>BOTTERILL | |